# EUROPÄISCHE PATENTANMELDUNG

(11) **EP 0 841 664 A2**
(43) Veröffentlichungstag der Anmeldung: **13.05.1998**
(21) Anmeldenummer: 97119322.2
(22) Anmeldetag: 05.11.1997
(51) Int. Cl.: G11B 27/00, G11B 27/11, G11B 27/34, G11B 15/02, H04N 5/782, H04N 7/088

(54) **Gerät zur Archivierung von Speicherdaten**

(30) Priorität: 08.11.1996 DE 19646127
(71) Anmelder: GRUNDIG Aktiengesellschaft, 90762 Fürth (DE)
(72) Erfinder: Kays, Rüdiger, Dr.-Ing., 90762 Fürth (DE)

(57) **Zusammenfassung**

Die Erfindung betrifft ein Gerät zur Archivierung von Speicherdaten, welches beispielsweise zur Speicherung von Video- und/oder Audioaufzeichnungsdaten verwendet werden kann. Das Archivierungsgerät (1) weist hierzu einen Speicher zur Speicherung von Archivdaten, eine Eingabeeinrichtung (3), eine Anzeigeeinrichtung (4) sowie eine Steuereinrichtung (5) zur Steuerung der Eingabe (3) und Anzeigeeinrichtung (4) auf. Ein derartiges Archivierungsgerät ist mit geringen Herstellungskosten verbunden und unabhängig beispielsweise von einem Videorecorder autark nutzbar.

Durch eine Nutzung von entsprechenden Schnittstellen kann das Archivierungsgerät (1) auch für die Kopplung mit einem Videorecorder und/oder einem Audioaufzeichnungsgerät optimiert werden, d.h. einerseits können vom Videorecorder beispielsweise aus dem Videotext extrahierte Daten dem Archivierungsgerät (1) zugeführt werden, andererseits können auch Daten des Archivierungsgeräts vom Videorecorder empfangen und entsprechend ausgewertet bzw. auf einem Bildschirm dargestellt werden.

## Beschreibung

Die Erfindung betrifft ein Gerät zur Archivierung von Speicherdaten.

Die Erfindung betrifft weiter ein System mit einem Kommunikationsgerät, insbesondere einem Videorecorder, einem Fernsehgerät und/oder einer Empfangseinrichtung und mit einem derartigen Gerät.

Ein derartiges Gerät ist beispielsweise für die Archivierung und Verwaltung von Aufzeichnungsträgern einsetzbar. Bei einem solchen Aufzeichnungsträger handelt es sich beispielsweise um einen Videorecorder, ein Kassetten- oder Tonbandgerät. Eine auf traditionelle Weise handschriftlich geführte Verwaltung von Aufzeichnungsträgern erfordert vom Benutzer sehr viel Disziplin.

Im Zusammenhang mit Videorecordern ist aus der EP 0 257 534 B1 eine Einrichtung zum Aufzeichnen und schnellem Wiederauffinden von Videosignalabschnitten auf einem Magnetband bekannt. Hierbei werden bei Aufzeichnung automatisch Informationen über die örtliche Lage jedes Videosignalabschnitts in einem geräteseitigen Speicher abgelegt, welcher zur Abspeicherung der Informationen einer Vielzahl von Magnetbandkassetten ausgelegt ist.

Aus Livingstone, P. et al: The M.A.R.C. II System: A Modular Multiplay Robotic RecordPlay Videocassette System. In SMPTE Journal, June 1990, Seiten 448 bis 452 ist ein Aufnahme-/Wiedergabesystem für Videokassetten beschrieben, Fernsehsendern den Zugriff auf eine Vielzahl von Videokassetten ermöglicht. Das System besteht aus einem Operating Computer zur Speicherung der in der Datenbank enthaltenen Archivdaten, wobei das System ähnlich wie ein Roboter auch selbsttätig gewünschte Aufnahmen aus dem Archiv holt und in einen der Videorecorder einlegt und abspielt.

Der Erfindung liegt die Aufgabe zugrunde, eine einfache Möglichkeit zur Archivierung von Speicherdaten anzugeben, wobei eine Archivierung selbständig und autark von dem Speichermedium, auf dem die zu verwaltenden Daten gespeichert sind, einsetzbar sein soll.

Diese Aufgabe wird durch ein Gerät mit den im Anspruch 1 angegebenen Merkmalen gelöst.

Der Erfindung liegt die Erkenntnis zugrunde, daß bei bisher vorgeschlagenen Archivsystemen, die eine Archivierung von Speicherdaten, d.h. eine Archivierung von Informationen über gespeicherte Daten ermöglichen, keine vom jeweiligen Gerät bzw. vom jeweiligen Speichermedium unabhängige Verwaltung von Archivbeständen möglich ist. Zudem ist eine entsprechende Archivierung jeweils auf einen entsprechenden Kassettentyp bzw. auf ein entsprechendes Aufnahme- oder Abspielgerät beschränkt. Mit der vorliegenden Erfindung wird es hingegen möglich, die Archivierung von Speicherdaten autark und darüberhinaus transportabel vorzunehmen, ohne daß bei einem Gerätewechsel die gespeicherten Archivierungsdaten verloren sind. Der im Gerät zur Archivierung der Speicherdaten enthaltene Speicher ermöglicht die Speicherung von Archivdaten, beispielsweise von Videoaufzeichnungen, wobei über die Eingabeeinrichtung und eine Anzeigeeinrichtung die Archivdaten, beispielsweise Kassettennummern, Aufnahmestart- und Aufnahmestoppzeiten, Titel von Aufzeichnungen, Kategorien von Aufzeichnungen, Datum der Aufzeichnungen, Quelle etc. eingebbar und darstellbar sind. Über die beispielsweise als Mikroprozessor ausgebildete Steuereinrichtung ist eine gezielte Steuerung der Eingabe- und Anzeigeeinrichtung möglich.

Ein vorteilhafter Anwendungsfall ergibt sich dadurch, daß das Gerät zur Archivierung von Videokassetten betreffenden Daten, insbesondere Kasettennummer, Titel, Anfangs- und Endzeiten, Datum der Aufnahme, Quelle und/oder Kategorie vorgesehen ist.

Ein zusätzlicher Nutzen des Geräts ergibt sich dadurch, daß das Gerät einen Infrarotsender zur Fernbedienung eines Kommunikationsgeräts, insbesondere eines Fernsehgeräts und/oder eines Videorecorders aufweist.

Der Komfort bei der Auswahl und Wiedergabe von archivierten Sendungen kann dadurch weiter erhöht werden, daß das Gerät Mittel zur Auswahl einer im Speicher des Geräts archivierten Aufnahme und zur Abgabe eines Fernbedienungsbefehls an einen Videorecorder aufweist, wobei der Videorecorder im Ansprechen auf den Fernbedienungsbefehl zur selbsttätigen Wiedergabe der ausgewählten Aufnahme vorgesehen ist.

Der Aufwand zur Eingabe der zu archivierenden Daten von Hand kann dadurch minimiert werden, daß das Gerät eine Empfangseinrichtung zum Empfang von Signalen des Videorecorders aufweist.

Die Möglichkeit zu einer weiteren Vernetzung mit weiteren Geräten ergibt sich dadurch, daß das Gerät eine bidirektionale Schnittstelle zu einem Kommunikationsgerät, insbesondere einem Videorecorder und/oder einer sonstigen Empfangseinrichtung aufweist, die zum Austausch von Daten zwischen dem Gerät und dem Kommunikationsgerät vorgesehen ist.

Eine zusätzliche oder alternative Möglichkeit zur 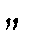 Programmierung" von Archivdaten kann dadurch geschaffen werden, daß das Gerät eine Kartenleseeinrichtung aufweist, die zum Lesen von auf einer Karte gespeicherten Programmdaten vorgesehen ist.

Alternativ hierzu ist eine Datenübertragung auch dadurch möglich, daß das Gerät eine Schnittstelle zu einem Telefonanschluß aufweist, die zum Austausch von Daten zwischen dem Gerät und einer mit dem Telefonanschluß koppelbaren Teilnehmeranschluß vorgesehen ist.

Anforderungen zur Datensicherheit allgemein oder speziell zur Sperrung bestimmter Daten, die beispielsweise für Kinder und Jugendliche wirken sollen, können dadurch erfüllt werden, daß das System Mittel zur Kontrolle einer Zugangsberechtigung zu bestimmten Archivdaten aufweist.

Im folgenden wird die Erfindung anhand der in den Figuren dargestellten Ausführungsbeispiele näher beschrieben und erläutert.

Es zeigen:
- Fig. 1: ein erstes Ausführungsbeispiel eines Geräts zur Archivierung von Speicherdaten mit einem Videorecorder und einem Fernsehgerät und
- Fig. 2: ein weiteres Ausführungsbeispiel eines Archivierungsgeräts mit einer Schnittstelle zu weiteren Kommunikationsgeräten..

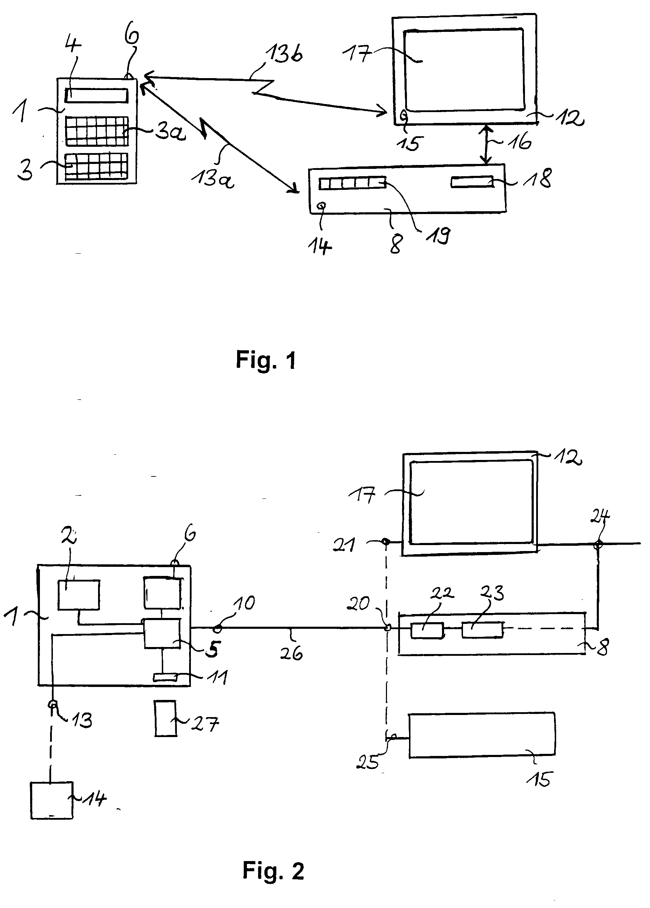

Fig. 1 zeigt ein Gerät 1 zur Archivierung von Speicherdaten, das im folgenden auch als Archivierungsgerät bezeichnet wird. Das Gerät 1 weist eine als erste Tastatur 3 und zweite Tastatur 3a ausgebildete Eingabeeinrichtung, eine Anzeigeeinrichtung 4 sowie eine Infrarotsendeeinrichtung 6 auf. In Fig. 1 ist darüberhinaus ein Videorecorder 8 dargestellt, der ein Bedienfeld 19, eine Anzeigeeinrichtung 18 sowie eine Infrarotempfangseinrichtung 14 aufweist. Der Videorecorder 8 ist über eine Verbindungseinrichtung 16 mit einem Fernsehempfänger 12 koppelbar. Der Fernsehempfänger 12 weist einen Bildschirm 17 sowie eine Infrarotempfangseinrichtung 15 auf. Der Infrarotsender 6 des Geräts 1 zur Archivierung ist in der Lage, über Infrarotverbindungen 13a, 13b Signale an die Infrarotempfangseinrichtungen 14, 15 des Videorecorders 8 sowie des Fernsehempfängers 12 zu senden.

Bei den in Fig. 1 dargestellten Videorecorder 8 und Fernsehempfänger 12 handelt es sich im wesentlichen um handelsübliche Geräte, die mit Hilfe des Geräts 1 zur Archivierung von Speicherdaten in bekannter Weise auch fernbedienbar sind. Diese Möglichkeit zur Fernbedienung für das Gerät 1 zur Archivierung von Speicherdaten ist jedoch optional, d.h. eine derartige Fernbedienungsgeberfunktion muß im Gerät 1 zur Archivierung der Speicherdaten nicht enthalten sein. In diesem Fall ist eine Fernbedienung der Geräte 8, 12 mit Hilfe einer handelsüblichen Fernbedienung möglich. Wie im Zusammenhang mit Fig. 2 noch ausführlich erläutert wird, weist das Gerät 1 zur Archivierung von Speicherdaten einen in Fig. 1 aus Gründen der Übersichtlichkeit nicht dargestellten Speicher zur Speicherung von Archivdaten sowie eine Steuereinrichtung zur Steuerung der Eingabe- 3, 3a und Anzeigeeinrichtung 4 auf. Die Eingabeeinrichtung 3 ist beispielsweise als alphanumerische Tastatur mit einem zusätzlichen Cursorkreuz ausgebildet, während die Anzeigeeinrichtung 4 beispielsweise als Display mit 4 Zeilen mit je 24 Zeichen ausgebildet sein kann. Als Speichereinrichtung wird beispielsweise ein digitaler Speicher mit 64 kB für etwa 500 Aufzeichnungen verwendet. Darüberhinaus ist das Archivierungsgerät 1 mit der beispielsweise als Mikroprozessor und Softwaremodulen für die Archivierung ausgebildeten Steuereinheit ausgestattet. Die Speichereinheit ermöglicht eine Speicherung von Kassettennummern und diesen Nummern zugeordneten Informationen über Aufnahmestart- und Stoppzeiten, über den Titel der Aufzeichnungen, über verschiedene Kategorien von Aufzeichnungen, über das Datum der Aufzeichnung, über die Quelle etc.. Das Archivierungsgerät 1 ersetzt somit eine ansonsten aufwendige schriftliche Aufzeichnung von Aufnahmedaten und ermöglicht darüberhinaus die Suche im Archivierungsgerät 1 nach verschiedenen Kriterien. beispielsweise im Datum der Aufzeichnung, der Kategorie etc..

Der Nutzen des Archivierungsgeräts kann durch zusätzliche Schnittstellen, insbesondere zum Videorecorder 8, noch weiter aufgewertet werden, ohne daß es jedoch am Grundprinzip der autarken Betreibbarkeit Einbußen erleitet. Neben dem bereits beschriebenen Einbau eines konventionellen Infrarotsenders, mit dem die Fernsteuerung des Videorecorders 8 möglich ist, können darüberhinaus im Videorecorder 8 weitere Komfortfunktionen implementiert werden, die mit Funktionen des Archivierungsgeräts kompatibel sind. Als Beispiel sei an dieser Stelle die Implementierung der Wiedergabefunktion nach Auswahl einer archivierten Aufzeichnung mit Hilfe des Archivierungsgeräts 1 erwähnt. Hierzu wird aus dem Archiv, d.h. aus dem Speicher des Archivierungsgeräts 1, beispielsweise über die Anzeigeeinrichtung 4 eine Sendung ausgesucht. Hierauf fordert das Archivierungsgerät und/oder der Videorecorder 8 zum Einlegen der entsprechenden Videokassette mit der entsprechenden Aufzeichnung auf. spult den Videorecorder 8 nach Einlegen der korrekten Videokassette an die entsprechende Stelle und beginnt die Wiedergabe. Eine weitere Komfortfunktion wird dadurch ermöglicht, daß eine exaktere und umfangreichere Darstellung der Speicherdaten des Archivierungsgeräts 1 dadurch ermöglicht wird, daß die entsprechenden Daten auf dem Bildschirm 17 des Fernsehgeräts 12 dargestellt werden. Hierzu können die entsprechenden Daten beispielsweise über die Infrarotschnittstelle 13b des Infrarotsenders 6 an den Infrarotempfänger 15 des Fernsehgeräts 12 übertragen werden.

Außerdem kann das Archivierungsgerät 1 auch zur Programmierung des Videorecorders 8 verwendet werden, wobei durch die Programmierung automatisch auch gleichzeitig eine Archivierung des entsprechenden Programmbeitrags erfolgen kann.

Eine sehr komfortable Speicherung der Archivierungsdaten kann dadurch ermöglicht werden, daß beispielsweise die Schnittstelle 13a zwischen Archivierungsgerät 1 und Videorecorder 8 als bidirektionale Schnittstelle ausgebildet ist. Hierdurch kann der Videorecorder 8 dem Archivierungsgerät 1 seinen Status, die Nummer der eingelegten Kassette und den Bandstand mitteilen. Durch Auswertung beispielsweise des Videotextes im Videorecorder 8 kann darüberhinaus gegebenenfalls sogar der Titel einer Sendung extrahiert und dem Archivierungsgerät 1 mitgeteilt werden. Hierdurch entfällt eine manuelle Eingabe mittels der Eingabeeinrichtung 3.

Fig. 2 zeigt ein weiteres Ausführungsbeispiel eines Archivierungsgeräts 1 mit einer Schnittstelle 10 zu weiteren Kommunikationsgeräten 8, 12, 15. Bei den Kommunikationsgeräten 8, 12, 15 handelt es sich bei den in Fig. 2 dargestellten Ausführungsbeispiel um einen Videorecorder 8, um ein Fernsehgerät 12 sowie um ein Audioaufzeichnungsgerät 15. Das Archivierungsgerät 1 weist einen Speicher 2, eine Steuereinrichtung 5, eine Infrarotsendeeinrichtung 9 mit einem Infrarotsendegeber 6 sowie ein Kartenlesegerät 11 auf. Darüberhinaus sind beim Archivierungsgerät 1 eine Schnittstelle 10 zu den Kommunikationsgeräten 8, 12, 15 sowie eine weitere Schnittstelle 13 zu einem Telefonanschluß, der mit einem Teilnehmer 14 verbindbar ist, vorgesehen. Die Kartenleseeinrichtung 11 ist zur Aufnahme einer beispielsweise als Chipkarte ausgebildeten Datenkarte 27 vorgesehen. Die Kommunikationsgeräte 8, 12, 15 sind über eine Verbindung 26 mit dem Archivierungsgerät koppelbar, wobei die Verbindung 26 als Infrarot- oder als Kabelverbindung ausgebildet sein kann. Für die Kopplung der Verbindung 26 mit den Kommunikationsgeräten 8, 12, 15 weisen diese Schnittstellen 20, 21, 25 auf. Das Fernsehgerät 12 sowie der Videorecorder 8 weisen darüberhinaus einen Antenneneingang 24 zum Empfang von Fernsehsignalen auf. Im Videorecorder 8 ist außerdem ein Videotextdecoder 23 sowie eine Sende-/Empfangseinrichtung 22 vorgesehen.

Die prinzipielle Funktionsweise des in Fig. 2 dargestellten Systems entspricht im wesentlichen dem im Zusammenhang mit Fig. 1 bereits beschriebenen Archivierungssystem, so daß auch auf die Ausführungen zu dem in Fig. 1 gezeigten Ausführungsbeispiel verwiesen wird. Das Archivierungsgerät 1 weist bei dem in Fig. 2 dargestellten Ausführungsbeispiel zusätzlich das Kartenlesegerät 11 auf, welches es ermöglicht, elektronische Programminformationen, die auf einer Chipkarte 27 enthalten sind, direkt in den Speicher 2 des Archivierungsgeräts zu übernehmen. Als Variante hierzu ist es ebenfalls möglich, elektronische Programminformationen über den Teilnehmeranschluß 14 und die Telefonschnittstelle 13 des Archivierungsgeräts zu empfangen. Als dritte Variante können auch elektronische Programmführer, die parallel zu den Fernsehsignalen ausgestrahlt werden, bei analogen Systemen beispielsweise durch digitale Signale in die Austastlücke, bei digitalen Signalen beispielsweise eingebettet in einen MPEG-Multiplex, vom Videorecorder 8 über einen entsprechenden Decoder 23 und eine Sendeeinrichtung 22 und über die Verbindungsleitung 26 an das Archivierungsgerät 1 weitergeleitet werden. Der Videorecorder 8 oder ggfs. auch das Fernsehgerät 12 übernimmt somit in bekannter Weise eine Auswertung der entsprechenden Programmdaten und teilt sie anschließend an das Archivierungsgerät 1 mit.

Das Archivierungsgerät 1 weist aufgrund seines einfachen Aufbaus geringe Herstellungskosten auf und ist unabhängig von Standort und Videorecorder bzw. Audioaufzeichnungsgerät autark nutzbar. Werden die Schnittstelle 26 für die Kopplung mit entsprechend angepaßtem Videorecorder 8, Fernsehgerät 12 und/oder Audioaufzeichnungsgerät 15 optimiert, so entsteht ein zusätzlicher Nutzen, wobei umgekehrt auch ein entsprechend modifizierter Videorecorder die Daten des Archivierungsgeräts 1 empfangen und auch über den Bildschirm 17 des Fernsehgeräts 12 in komfortabler Weise darstellen kann.

## Patentansprüche

1. Gerät (1) zur Archivierung von Speicherdaten, insbesondere von Speicherdaten über Videoaufnahmen, mit einem Speicher (2) zur Speicherung von Archivdaten, mit einer Eingabeeinrichtung (3), mit einer Anzeigeeinrichtung (4) und mit einer Steuereinrichtung (5) zur Steuerung der Eingabe- (3) und Anzeigeeinrichtung (4) und mit Mitteln zur Auswahl von im Speicher des Geräts (1) archivierten Speicherdaten,
**dadurch gekennzeichnet**,
daß das Gerät (1) Mittel (6) zur Fernbedienung eines Kommunikationsgeräts, insbesondere eines Videorecorders (8) und/oder eines Fernsehgeräts (12) aufweist, daß das Gerät (1) zur autarken und transportablen Archivierung der Speicherdaten vorgesehen ist.

2. Gerät nach Anspruch 1,
**dadurch gekennzeichnet**,
daß der Speicher (2) zur Speicherung von Videokassetten betreffenden Daten, insbesondere Kassettennummer, Titel, Anfangs- und Endzeiten, Datum der Aufnahme, Quelle und/oder Kategorie vorgesehen ist.

3. Gerät nach einem der Ansprüche 1 oder 2,
**dadurch gekennzeichnet**,
daß das Gerät (1) einen Infrarotsender (6) zur Fernbedienung des Kommunikationsgeräts, insbesondere Videorecorders (8) und/oder eines Fernsehgeräts (12) aufweist.

4. Gerät nach einem der Ansprüche 1 bis 3,
**dadurch gekennzeichnet**,
daß das Gerät (1) Mittel (7) zur Auswahl einer im Speicher des Geräts (1) archivierten Aufnahme und zur Abgabe eines Fernbedienungsbefehls an einen Videorecorder (8) aufweist, wobei der Videorecorder (8) im Ansprechen auf den Fernbedienungsbefehl zur selbsttätigen Wiedergabe der ausgewählten Aufnahme vorgesehen ist.

5. Gerät nach einem der Ansprüche 1 bis 4,
**dadurch gekennzeichnet**,
daß das Gerät (1) eine Empfangseinrichtung (9) zum Empfang.von Signalen des Videorecorders (8) aufweist.

6. Gerät nach einem der Ansprüche 1 bis 5,
**dadurch gekennzeichnet**,
daß das Gerät (1) eine bidirektionale Schnittstelle (10) zu einem Kommunikationsgerät (8, 12, 15), insbesondere einem Videorecorder (8) und/oder einer sonstigen Empfangseinrichtung (12, 15) aufweist, die zum Austausch von Daten zwischen dem Gerät (1) und dem Kommunikationsgerät (8, 12, 15) vorgesehen ist.

7. Gerät nach einem der Ansprüche 1 bis 6,
**dadurch gekennzeichnet**,
daß das Gerät (1) eine Kartenleseeinrichtung (11) aufweist, die zum Lesen von auf einer Karte (12) gespeicherten Programmdaten vorgesehen ist.

8. Gerät nach einem der Ansprüche 1 bis 7,
**dadurch gekennzeichnet**,
daß das Gerät (1) eine Schnittstelle (13) zu einem Telefonanschluß aufweist, die zum Austausch von Daten zwischen dem Gerät (1) und einer mit dem Telefonanschluß koppelbaren Teilnehmeranschluß (14) vorgesehen ist.

9. Gerät nach einem der Ansprüche 1 bis 8,
**dadurch gekennzeichnet**,
daß das System Mittel (5) zur Kontrolle einer Zugangsberechtigung zu bestimmten Archivdaten aufweist.

10. Gerät nach einem der Ansprüche 1 bis 9,
**dadurch gekennzeichnet**,
daß die Speicherdaten über eine drahtlose Schnittstelle (13b) an das Fernsehgeräts (12) übertragen werden und daß die Speicherdaten des Geräts (1) zur Darstellung auf einem Bildschirm (17) des Fernsehgeräts (12) vorgesehen sind.

11. Gerät nach einem der Ansprüche 1 bis 10,
**dadurch gekennzeichnet**,
daß das Gerät (1) zur Programmierung des Videorecorders (8) und zur gleichzeitigen Archivierung des entsprechenden Programmbeitrages vorgesehen ist

12. Gerät nach einem der Ansprüche 1 bis 11,
**dadurch gekennzeichnet**,
daß die bidirektionale Schnittstelle (13a) zwischen Gerät (1) und Videorecorder (8) zur Übertragung von Status, Nummer der eingelegten Kassette und Bandstand an das Gerät (1) vorgesehen ist.

13. Gerät nach einem der Ansprüche 1 bis 12,
**dadurch gekennzeichnet**,
daß das Gerät (1) zum Empfang des aus dem Videotext im Videorecorder (8) extrahierten Titel einer Sendung vorgesehen ist.

14. Fernbedienungsgeber zur Fernbedienung eines Kommunikationsgeräts, insbesondere eines Fernsehgeräts (12) und/oder eines Videorecorders (8), wobei in dem Fernbedienungsgeber ein Gerät (1) nach einem der Ansprüche 1 bis 13 integriert ist.

15. System mit einem Kommunikationsgerät (8, 12, 15), insbesondere einem Videorecorder (8), einem Fernsehgerät (12) und/oder einer Empfangseinrichtung (15) und mit einem Gerät (1) zur Archivierung nach einem der Ansprüche 1 bis 13.
